Europäisches Patentamt

European Patent Office

Office européen des brevets

(19)

(11) Veröffentlichungsnummer: **0 501 349 A1**

# EUROPÄISCHE PATENTANMELDUNG

(21) Anmeldenummer: **92102985.6**

(22) Anmeldetag: **22.02.92**

(51) Int. Cl.5: **A01B 33/14**

(30) Priorität: **27.02.91 DE 4106181**

(43) Veröffentlichungstag der Anmeldung:
**02.09.92 Patentblatt 92/36**

(84) Benannte Vertragsstaaten:
**ES FR GB IT**

(71) Anmelder: **KVERNELAND KLEPP AS**

**N-4344 Kvernaland(NO)**

(72) Erfinder: **Skjäveland, Magne**
**Th. Dahls v. 32**
**N-4062 Klepp St.(NO)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**W-4000 Düsseldorf 1(DE)**

(54) **Bodenbearbeitungsgerät.**

(57) Bei einem Bodenbearbeitungsgerät sind an einem Rohrrahmen (1) um eine vertikale Achse mit ihren Einsteckenden zwischen Klemmplatten (12, 13) liegende Werkzeuge (14, 14') angeordnet.

Fig.1

EP 0 501 349 A1

Die Erfindung bezieht sich auf ein Bodenbearbeitungsgerät beispielsweise eine Kreiselegge mit einem Rahmen, an dem mehrere Bodenbearbeitungswerkzeuge, beispielsweise Kreiselzinken um eine vertikale Achse drehbar gelagert sind und über ein Getriebe mit einem Antrieb verbunden sind.

Kreiseleggen dieser Art sind aus den deutschen Offenlegungsschriften 25 38 306 und 34 37 623 sowie der französischen Patentschrift 83 17 155 bekannt; es handelt sich dabei um komplizierte und aufwendige Konstruktionen mit zahlreichen Schraubverbindungen und Übertragungsmitteln. So beschreibt die deutsche Offenlegungsschrift 34 37 623 eine Kreiselegge, bei der die Zinken einzeln in einem mit entsprechenden Bohrungen versehenen und mittig auf einer Antriebswelle gelagerten Werkzeugträger befestigt sind und die Welle im Bereich des Werkzeugträgers eine Klemmutter aufweist. Jeder einzelne Zinken ist dabei innerhalb einer Bohrung des Werkzeugträgers mit Hilfe eines Kopf- bzw. Gewindebolzens und einer Mutter befestigt. Hinzu kommt ein querliegender Hauptrahmen aus mehreren koaxialen und miteinander verschraubten Flanschrohren.

Ähnlich aufgebaut ist die Kreiselegge nach der deutschen Offenlegungsschrift 25 38 306; sie ist daher mit denselben technischen Mängeln und Nachteilen behaftet.

Die französische Patentschrift 83 17 155 beschreibt hingegen eine Kreiselegge, bei der die Zinken unter Verwendung eines Kopfbolzens und einer Mutter einzeln mit dem zugehörigen Werkzeugträger verschraubt sind. Der Werkzeugträger sitzt seinerseits auf dem mit einem Gewinde versehenen Ende einer Antriebswelle und ist dort mit Hilfe einer dichtenden Mutter verschraubt.

Die große Zahl von Schraubverbindungen der herkömmlichen Kreiseleggen macht nicht nur deren Herstellung lohnintensiv und zeitaufwendig, sondern erschwert auch die Endkontrolle und die spätere Wartung. So müssen die Zinken von Zeit zu Zeit ersetzt werden. Das erfordert bei einer Kreiselegge mit einer Arbeitsbreite von etwa 3 m normalerweise acht Mannstunden.

Hinzu kommt, daß die zahlreichen unter Verwendung von Schraubverbindungen befestigten Einzelteile herkömmlicher Kreiseleggen eine entsprechende Zahl von Risikopunkten im Hinblick auf die Gefahr eines unerwünschten Lösens der Schraubverbindungen mit sich bringen. Das verlangt eine regelmäßige Kontrolle aller Schraubverbindungen und ein Nachziehen gelöster Schraubverbindungen, um sicherzustellen, daß alle Schraubverbindungen fest angezogen sind. Hinzu kommt, daß es bei einem Zinkenbruch oder anderen gravierenden Zinkenbeschädigungen nicht unüblich ist, den betreffenden Zinken bei noch mit dem Traktor gekuppelter Kreiselegge zu ersetzen.

Dabei wird die Kreiselegge mittels einer Drei-Punkt-Aufhängung des Traktors angehoben und bewegt sich der Monteur beim Austausch des Zinkens zum Teil unterhalb des Geräts.

Angesichts der Schwere des Geräts ist damit eine erhebliche Personengefährdung verbunden.

Des weiteren bringen die vielen Schraubverbindungen herkömmlicher Kreiseleggen entsprechend viele Dichtflächen mit der Gefahr eines Schmiermittelaustritts an einer großen Zahl von Gefahrenpunkten mit sich.

Der Erfindung liegt daher die Aufgabe zugrunde, die vorerwähnten Nachteile der herkömmlichen Kreiseleggen zu vermeiden und eine Kreiselegge mit einer Reihe eigener Vorteile zu schaffen.

Die Lösung dieser Aufgabe besteht u.a. in einer Kreiselegge, deren Rahmen erfindungsgemäß aus einem durchgehenden Rohr besteht. Aufgrund praktischer Erwägungen sollte es sich dabei um ein Vierkantrohr handeln, das in situ so angeordnet ist, daß jeweils zwei einander gegenüberliegende Wandflächen horizontal bzw. vertikal verlaufen. Andererseits eignet sich jedoch auch ein an seiner Ober- und seiner Unterseite abgeflachtes Rundrohr. Das durchgehende Rahmenrohr kann aus zwei miteinander verschweißten Teilen bestehen, wenngleich dies erhöhte Herstellungskosten mit sich bringt.

Das Rahmenrohr besitzt für jedes Rotationswerkzeug vertikal miteinander fluchtende Öffnungen für eine Antriebswelle.

Die Enden der Antriebswelle können die Rohrwandung überragen. Das untere Wellenende ist mit mindestens zwei Klemmplatten zum lösbaren Befestigen mindestens eines Zinkens versehen. Die Klemmplatten lassen sich axial von dem Wellenende abziehen. Mindestens eine von ihnen ist in der Lage, ein Drehmoment von der Welle auf das Werkzeug zu übertragen und befindet sich in einer leicht lösbaren Verbindung mit einem komplementären Teil des Zinkens. Das obere Wellenende ist mit einem Gewinde für eine dichtende Sicherungsmutter versehen.

Beim Austausch eines beschädigten Zinkens braucht lediglich die Sicherungsmutter etwas gelöst und anschließend auf das obere Wellenende ein axialer Schlag ausgeübt zu werden, der zu einem Lösen der Klemmplatten führt und es alsdann erlaubt, das Einsteck- bzw. Befestigungsende des Zinkens zwischen den Klemmplatten herauszuziehen und so den Zinken zu entfernen. Anschließend wird das Befestigungsende eines neuen Zinkens zwischen die Klemmplatten geschoben und die Sicherungsmutter am oberen Wellenende wieder angezogen.

Der das Übertragen eines Drehmoments zwischen der Welle und den Klemmplatten erlaubende Eingriff läßt sich formschlüssig erreichen, beispielsweise mit Hilfe eines nicht kreisförmigen, beispielsweise hexagonalen Kupplungsstücks. So kann sich beispielsweise eine Kappe am unteren Wellenende befinden, die sich ihrerseits in formschlüssiger Verbindung mit einer der Klemmplatten, beispielsweise in einer zentrisch angeordneten komplementären Klemmplattenausnehmung befindet. Eine der beiden Klemmplatten kann auch auf andere Weise, beispielsweise mit Hilfe eines Splints oder durch Schweißen drehfest mit der Welle verbunden sein.

Die Sicherungsschraube kann auf einfache Weise gegen ein Lösen gesichert sein; so kann das obere Wellenende in seinem oberhalb der oberen Endstellung der Sicherungsmutter befindlichen Teil mit einer Sicherung, beispielsweise mit einer Klemmhülse versehen sein.

Die Erfindung wird nachfolgend anhand eines in der Zeichnung dargestellten Ausführungsbeispiels des näheren erläutert. In der Zeichnung zeigen:

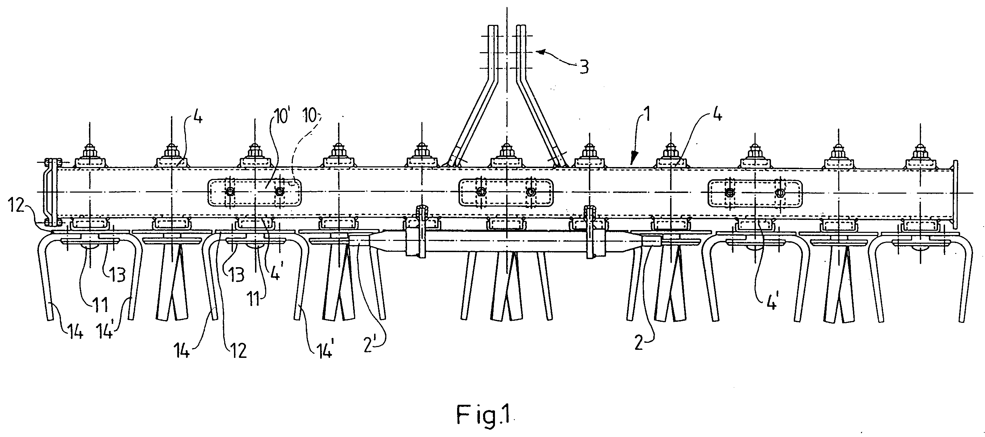

Fig. 1 die Rückansicht einer Kreiselegge,

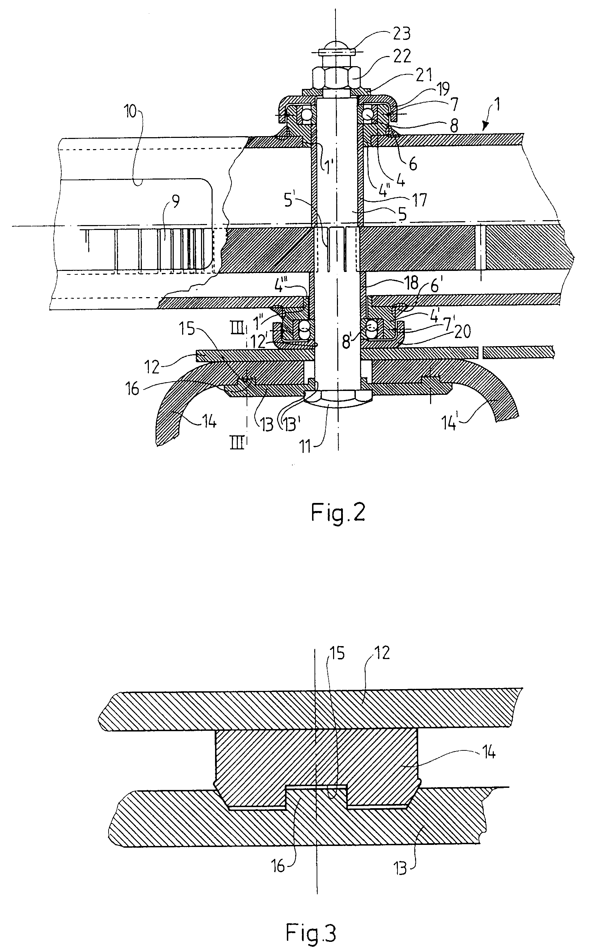

Fig. 2 eine vergrößerte Detaildarstellung einer Zinkenbefestigung,
Fig. 3 einen vergrößerten Vertikalschnitt nach der Linie III-III in Fig. 2.

Die Kreiselegge besteht aus einem Rahmenträger 1 mit quadratischem Querschnitt und besitzt Kupplungsstücke 2, 2' für eine Drei-Punkt-Aufhängung 3 an einem Traktor.

Die Rohrwandung weist oben und unten einander gegenüberliegende bzw. miteinander fluchtende Öffnungen 1', 1'' mit angeschweißten einander ebenfalls gegenüberliegenden Lagergehäusen 4, 4' für eine den Rahmenträger 1 quer durchragende und beiderseits überragende Antriebswelle 5 auf. Der Rahmenträger 1 ist in regelmäßigen Abständen über seine gesamte Länge mit gleichartigen Wellen 5 in eingeschweißten Lagergehäusen 4, 4' versehen.

Jedes Lagergehäuse 4, 4' greift teilweise in die zugehörige Rohröffnung 1, 1' mit einem ringförmigen Kragen 4'', 4''' ein, während der übrige Teil des Lagergehäuses 4, 4' außerhalb der Rohrwandung liegt. Die Lagergehäuse 4, 4' sind über Schweißnähte 6, 6' mit der Rohrwandung verschweißt sowie jeweils mit Dichtungsringen 7, 7' und Lagern 8, 8' für die Welle 5 versehen.

Die Welle 5 besitzt Längsnuten 5' für die Montage eines Antriebsritzels 9, an dessen Stelle jedoch auch eine V-Keilriemen-Scheibe treten kann. Das Ritzel 9 läßt sich beim Montieren durch eine Montageöffnung 10 in der Rohrwandung einsetzen. Die Montageöffnungen 10 sind so über das Rahmenrohr verteilt, daß sich von jeder Öffnung aus drei Ritzel 9 montieren und demontieren lassen.

Die Ritzel 9 stehen in üblicher, zeichnerisch nicht dargestellter Weise in Antriebsverbindung mit dem Motor des Traktors.

Die Montageöffnungen werden, solange sie nicht benötigt werden, mit Hilfe eines Deckels 10' verschlossen gehalten.

Das untere Ende jeder Welle 5 ist mit einem hexagonalen Fußstück 11 versehen.

Zwischen je weit parallel zueinander sowie zu der oberen und der unteren Rohrfläche angeordneten, d.h. in situ horizontal verlaufenden Klemmplatten 12, 13 liegen die Einsteckenden zweier Zinken 14, 14'. Beide Klemmplatten 12, 13 besitzen jeweils eine zentrische Öffnung 12', 13', mit der sie auf das Gewindeende der Antriebswelle 5 geschraubt sind. Die Klemmplatte 13 ist mit einer gestuften Öffnung 13' versehen und nimmt so einen Teil des hexagonalen Fußstücks 11 auf. Auf diese Weise befinden sich die beiden Klemmplatten 12, 13 in Antriebsverbindung mit der Welle 5.

Die zwischen den Klemmplatten 12, 13 befindlichen Einsteckenden der Zinken 14, 14' sind mit einer Ausnehmung 15 versehen, in die ein komplementäres Kupplungsstück, beispielsweise ein Nokken 16 der unteren Platte 13 eingreift. In ähnlicher Weise kann die formschlüssige Verbindung 15, 16 zwischen den Klemmplatten und den Einsteckenden der Zinken 14, 14' auch im Bereich der oberen Klemmplatte 12 angeordnet sein, wenn sich diese beispielsweise vermittels einer Nut-Feder-Verbindung in Antriebsverbindung mit der Welle 5 befindet. Um die Zinken sicher zwischen den Klemmplatten zu befestigen, gibt es eine Reihe anderer Eingriffsmöglichkeiten zwischen den Zinkenenden und mindestens einer der Klemmplatten 12, 13.

Die Eingriffstiefe der komplementären Teile 15, 16 sollte nicht zu groß sein. Empfehlenswert ist ein polygonaler Umfang und eine Eingriffstiefe von etwa der Hälfte des Eingriffsdurchmessers, um ein leichtes Positionieren der Einsteckenden und eine korrekte Orientierung der Zinken 14, 14' in bezug auf den Rahmen 1 zu gewährleisten.

Auf der Antriebswelle 5 befinden sich noch weitere Montageteile wie zwei axiale Distanzbüchsen, deren obere sich zwischen dem Kopflager 8 und der Nabe des Ritzels 9, deren untere sich hingegen zwischen der Ritzelnabe und dem Fußlager 8' befindet. Außerdem übergreifen Dichtkappen 19, 20 die beiden Wellenlager 8, 8' und überdeckt eine Unterlegscheibe 21 die obere Dichtkappe 19.

Das hexagonale Fußstück 11 und die Sicherungsmutter 22 gewährleisten die erforderliche Betriebslage der Bauteile 12, 13, 14, 17, 18, 19, 20, 21, nicht jedoch der in den Rahmenträger eingeschweißten Lagergehäuse 4, 4' mit ihren Dichtungsringen 7, 7' und Wellenlagern 8, 8'.

Um ein unbeabsichtigtes Lösen der Sicherungsmutter 22 beispielsweise unter dem Einfluß von Vibrationen zu vermeiden, befindet sich am Kopfende der Antriebswelle 5 eine Klemmkappe 23.

Das Fußstück 11 der Welle 5 liegt der Mutter 22 gegenüber und besitzt eine unregelmäßige, beispielsweise hexagonale Kontur, um das Drehmoment von der Antriebswelle 5 über die Klemmplatte 13 auf die Zinken 14, 14' zu übertragen. Um das zu ermöglichen, ist die Klemmplatte 13 mit einer komplementären Öffnung versehen, in die das Fußstück 11 zumindest teilweise eingreift. Dies geschieht im größeren Teil der Plattenöffnung 13', deren kleinerer Teil kreisförmig ausgebildet ist und einen etwas größeren Durchmesser als die Antriebswelle 5 besitzt.

Der Rahmenträger 1 ist über seine Länge mit mehreren lösbaren Zinken oder Sätzen aus jeweils für sich lösbar befestigten Zinken versehen. Das Lösen der Zinken 14, 14' vollzieht sich in folgender Weise:

Um einen Zinken 14, 14' gegen einen neuen Zinken auszutauschen, wird zunächst die betreffende Sicherungsmutter 22 gelöst, bis sie in etwa an dem Kragen der Klemmplatte 23 anliegt, die ein völliges Abschrauben der Mutter und deren Verlust verhindert.

Um die Reibungskräfte zwischen den einzelnen Bauteilen zu überwinden, empfiehlt sich ein kurzer Schlag auf die Klemmkappe 23, der zu einer Abwärtsbewegung der Antriebswelle 5 führt, bis die untere Fläche der Sicherungsmutter 22 auf die Unterlegscheibe 21 trifft. Alsdann befindet sich die Antriebswelle 5 in einer anderen Lage in bezug auf die verschiedenen mit ihr in Berührung stehenden Bauteile, ohne daß sich irgendwelche Probleme ergeben. Die Wellenbewegung nach unten hebt die Haltekräfte zwischen den Klemmplatten 12, 13 und den Einsteckenden der Zinken 14, 14' auf und erlaubt eine achsparallele Bewegung der Einsteckenden, um diese außer Eingriff mit den Klemmplatten 12, 13 zu bringen bzw. die beiden Komplementärteile 15, 16 auseinanderzubringen. Durch ein Anheben des zu demontierenden Zinkens wird die formschlüssige Verbindung 15, 16 gelöst und läßt sich alsdann das Einsteckende radial zwischen den Klemmplatten 12, 13 herausziehen.

Danach läßt sich ohne weiteres das Einsteckende eines neuen Zinkens zwischen die Klemmplatten 12, 13 einschieben, bis dessen Ausnehmung 15 den komplementären Nocken 16 der unteren Klemmplatte 13 übergreift. Danach braucht lediglich noch die Mutter 22 am Kopfende der Welle 5 angezogen zu werden, um die Egge betriebsbereit zu machen.

Je nach Zahl der einer Antriebswelle zugeordneten Zinken können auch mehr als zwei Klemmplatten 12, 13 je Antriebswelle zur Verwendung kommen.

Die erfindungsgemäße Verbindung zwischen dem Rahmenträger 1, den Antriebswellen 5 und den Zinken 14, 14' erlaubt eine Zinkenmontage und -demontage ohne daß sich der Monteur zumindest teilweise unter die Zinken begeben muß, um irgendwelche Schraubverbindungen zu lösen. Dies geschieht erfindungsgemäß vielmehr ausschließlich von oben, so daß ein ebenso einfacher wie gefahrloser Zinkenaustausch an der Unterseite des Rahmenträgers möglich ist.

Hinzu kommt die einfache Beschaffenheit des Rahmenrohrs 1 mit seinen eingeschweißten Wellenlagern 4, 4' sowie die geringe Anzahl von Befestigungsschrauben.

Von besonderem Vorteil hinsichtlich der Montage ist auch die Tatsache, daß alle wesentlichen Bauteile der Zinkenbefestigung am Rahmenrohr 1 von einer einzigen Mutter 22 gehalten werden. Damit entfallen die Probleme beim Lösen zahlreicher Schraubverbindungen und die vielen Dichtungsflächen herkömmlicher Kreiseleggen. Demgemäß beschränkt sich auch die Gefahr eines Ölaustritts auf die beiden Dichtungsringe 7, 7'.

Ein weiterer wesentlicher Vorteil ergibt sich schließlich daraus, daß die Zinken keine schwächenden Querschnittsverringerungen, beispielsweise Bohrungen wie bei herkömmlichen Zinken besitzen.

## Patentansprüche

1. Bodenbearbeitungsgerät mit
   - an einem Rahmen (1) um eine vertikale Achse
   - drehbar zwischen Klemmflächen (12, 13)
   - mit ihren Einsteckenden angeordneten angetriebenen Werkzeugen (14, 14').

2. Bodenbearbeitungsgerät nach Anspruch 1, dadurch gekennzeichnet, daß der Rahmen aus einem Rohr (1) mit einer oberen und einer unteren Fläche und übereinanderliegenden Öffnungen (1', 1'') mit einer angetriebenen Welle (5) besteht.

3. Bodenbearbeitungsgerät nach Anspruch 1 oder 2, dadurch gekennzeichnet, daß sich am unteren Ende der Welle (2) eine Axialbewegung gegeneinander erlaubende Klemmplatten (12, 13) befinden und mindestens eine der Klemmplatten drehfest mit der Welle verbunden ist.

4. Bodenbearbeitungsgerät nach einem der Ansprüche 1 bis 3, dadurch gekennzeichnet, daß die Antriebswelle (5) das Rahmenrohr (1) überragt und am oberen Ende eine Sicherungsmutter (22) trägt.

5. Bodenbearbeitungsgerät nach einem der Ansprüche 1 bis 4, dadurch gekennzeichnet, daß einer der Klemmplatten (12, 13) und das Einsteckende eines Werkzeugs (14, 14') formschlüssig miteinander verbunden sind.

6. Bodenbearbeitungsgerät nach einem der Ansprüche 1 bis 5, dadurch gekennzeichnet, daß die Antriebswelle (5) und eine der Klemmplatten (12, 13) formschlüssig miteinander verbunden sind.

7. Bodenbearbeitungsgerät nach einem der Ansprüche 1 bis 6, dadurch gekennzeichnet, daß das Kopfende der Antriebswelle (5) mit einer Klemmsicherung (23) für die Sicherungsmutter (22) versehen ist.

8. Bodenbearbeitungsgerät nach Anspruch 7, dadurch gekennzeichnet, daß eine Klemmkappe (23) mit einer Anschlagfläche im Abstand von der Sicherungsmutter (22) im angezogenen Zustand auf dem Kopfende der Welle (5) angeordnet ist.

9. Bodenbearbeitungsgerät nach einem der Ansprüche 1 bis 8, dadurch gekennzeichnet, daß im Bereich der beiden Wellenenden je ein in die Rohrwandung eingreifendes Wellenlager (4, 4') angeordnet ist.

10. Bodenbearbeitungsgerät nach einem der Ansprüche 1 bis 9, dadurch gekennzeichnet, daß auf jeder Welle (5) ein Ritzel (9) angeordnet und der Rahmenträger (1) mit einer entsprechenden Montageöffnung (10) versehen ist.

11. Bodenbearbeitungsgerät nach einem der Ansprüche 1 bis 10, dadurch gekennzeichnet, daß zwischen der Ritzelnabe und den Wellenlagern (8, 8') jeweils eine Distanzhülse (17, 18) angeordnet ist.

12. Bodenbearbeitungsgerät nach einem der Ansprüche 1 bis 11, dadurch gekennzeichnet, daß die untere Klemmplatte (13) mit einer Stufenbohrung (13') versehen ist, in deren einen Teil formschlüssig ein Fußstück (11) der Welle (5) eingreift.

Fig.1

EP 0 501 349 A1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 364 466 (C. VAN DER LELY N.V.) <br> * Seite 2, Zeile 16 - Zeile 129; Abbildungen * <br> --- | 1,3,5,6 | A01B33/14 |
| X | GB-A-2 200 826 (DOWDESWELL ENGINEERING CO LTD) <br><br> * das ganze Dokument * <br> --- | 1,3,5,6, 12 | |
| A | AT-B-0 335 213 (C. VAN DER LELY N.V.) <br> * Seite 2, Zeile 30 - Zeile 48; Abbildung 4 * <br> --- | 1,3,6 | |
| A | EP-A-0 407 723 (AMAZONEN-WERKE H. DREYER GMBH & CO. KG) <br> * das ganze Dokument * <br> --- | 1 | |
| A | FR-A-2 512 627 (J. P. TONON ET AL.) <br><br> * das ganze Dokument * <br> --- | 2,4,10, 11 | |
| A,D | DE-A-3 437 623 (C. VAN DER LELY N.V.) <br> --- | | |
| A,D | FR-A-2 535 148 (C. VAN DER LELY N.V.) <br><br> ----- | | RECHERCHIERTE SACHGEBIETE (Int. Cl.5) <br><br> A01B |

Der vorliegende Recherchenbericht wurde für alle Patentansprüche erstellt

| Recherchenort | Abschlußdatum der Recherche | Prüfer |
|---|---|---|
| BERLIN | 24 APRIL 1992 | MERCKX A. |